# FASCICULE DE BREVET EUROPEEN

(11) **EP 0 468 889 B1**
(45) Date de publication et mention de la délivrance du brevet: **17.01.1996**
(21) Numéro de dépôt: 91402061.5
(22) Date de dépôt: 24.07.1991
(51) Int. Cl.: G02F 1/21

(54) **Dispositif modulateur spatial de lumière et système d'holographie conoscopique à grande dynamique comportant un tel dispositif modulateur**
Räumlicher Lichtmodulator und hochdynamische konoskopische Holographievorrichtung unter Verwendung desselben
Spatial light modulator device and wide dynamic conoscopic holography apparatus using the same

(30) Priorité: 27.07.1990 FR 9009630
(43) Date de publication de la demande: 29.01.1992
(73) Titulaire: FRANCE TELECOM, F-75015 Paris (FR)
(72) Inventeur: Agranat, Aharon, F-75013 Paris (FR); Sirat, Gabriel, F-75013 Paris (FR)
(74) Mandataire: Fréchède, Michel

(56) Documents cités:
- EP-A- 0 271 411
- EP-A- 0 376 837
- US-A- 3 552 824
- APPL. PHYS. LETT., vol. 34, no. 8, 15 avril 1979, pages 511-514; H.M. GIBBS et al. : "Optical modulation by optical tuning of a cavity"
- N.T.I.S. TECH. NOTES, octobre 1986, page 1063, Springfield, VA, US; G.K. SCHWEMMER: "Electro-optical tuning of fabry-perot interferometers"

## Description

L'invention est relative à un dispositif modulateur spatial de lumière et à un système d'holographie conoscopique à grande dynamique comportant un tel dispositif modulateur.

Les modulateurs spatiaux de lumière constituent actuellement l'un des composants essentiels de la majeure partie des systèmes de traitement optique de l'information.

Parmi ces composants, une catégorie essentielle de ceux-ci est formée par les modulateurs spatiaux de lumière à écriture optique, lesquels permettent de convertir un champ ou faisceau lumineux d'entrée en un champ ou faisceau lumineux de sortie, le faisceau lumineux de sortie contenant une copie de l'information d'entrée, ou image, contenue dans le faisceau lumineux d'entrée. Cependant, les propriétés optiques du faisceau lumineux de sortie sont adaptées de façon à satisfaire aux exigences du système de traitement optique placé en aval du modulateur.

Pour une description plus détaillée-de ces composants dans leurs caractéristiques essentielles, on pourra se reporter à l'ouvrage édité par NEIL COLLINGS intitulé "OPTICAL PATTERN RECOGNITION" chapitre 4, Spatial light modulators / Addison-Wesley Publishing Company ISBN 0 201 14549 9. Parmi ceux-ci, on peut citer des dispositifs bistables optiques à cristal photoréfractif, tels que décrits par le document EP-A-271 411. Dans ce type de dispositif, un élément non linéaire (élément photoréfractif) est introduit dans un interféromètre FABRY-PEROT. Les deux états stables de transmitivité correspondent aux points de tangence discrets d'une droite et de la caractéristique de transmitivité. Ce type de dispositif opère comme un système à deux états stables dans lequel la partie linéaire ou pente de la caractéristique n'est pas utilisée.

Dans les dispositifs d'holographie conoscopique, un cristal biréfringent placé entre deux polariseurs circulaires est illuminé en lumière non cohérente afin d'obtenir une image holographique de l'image d'un objet initial. De manière générale, on considère que les faisceaux lumineux ordinaire et extraordinaire engendrés à partir de l'image initiale par le cristal biréfringent sont équivalents au faisceau lumineux objet et faisceau lumineux de référence en holographie en lumière cohérente. Pour une description plus détaillée de ce type de dispositif, on pourra se reporter par exemple à la demande de brevet français n° 88 17225 déposée le 27/12/1988 au nom de l'Etat Français.

Les dispositifs d'holographie conoscopique précités présentent, par rapport aux dispositifs d'holographie en lumière cohérente, l'avantage d'une mise en oeuvre simplifiée au moyen de polariseurs circulaires, d'un cristal biréfringent, le faisceau d'illumination étant un faisceau monochromatique non cohérent.

Toutefois, ces dispositifs engendrent un faisceau d'image conoscopique lequel comporte une forte composante continue inhérente à la modulation spatiale d'amplitude du faisceau lumineux d'entrée pour constituer l'image contenant l'information d'entrée. L'existence d'une telle composante présente l'inconvénient de limiter fortement la valeur du rapport signal à bruit des dispositifs d'holographie conoscopique correspondants. En effet, une telle composante continue imputable à l'intensité du faisceau lumineux d'entrée, avant formation de l'image de l'objet à traiter par holographie conoscopique, ne peut pas être physiquement supprimée, avant ou après traitement par holographie conoscopique, tout prétraitement optique suivi d'une conversion en signaux électroniques correspondants étant de nature à détériorer l'information recherchée obtenue du fait du traitement holographique.

L'invention a pour objet de remédier aux inconvénients précités par la mise en oeuvre d'un dispositif modulateur spatial de lumière permettant, sur un faisceau d'entrée, de régler le point de fonctionnement et de diminuer ou supprimer la composante continue de ce faisceau d'entrée, tout en conservant les qualités de dynamique d'amplitude du faisceau d'entrée transmis et d'un faisceau lumineux de lecture correspondant de façon à augmenter le rapport signal à bruit à la détection.

Un autre objet de la présente invention est la mise en oeuvre d'un dispositif modulateur spatial de lumière dans lequel le faisceau lumineux d'écriture peut être constitué par un faisceau de lumière non cohérente alors que le faisceau de lecture peut, au contraire, être constitué par un faisceau de lumière cohérente afin d'assurer une conversion d'information non cohérente en information cohérente en vue d'une reconstruction de l'information cohérente en temps réel.

Le dispositif modulateur spatial de lumière, objet de la présente invention, comporte un cristal. Il est remarquable en ce que ce cristal est placé dans la cavité d'un système interférométrique présentant une caractéristique transmittivité-chemin optique de pente élevée de façon à induire une dynamique de variation maximale de ladite transmittivité pour une variation minimale d'indice de réfraction dudit cristal. Le système est écrit à l'aide d'un faisceau lumineux d'écriture qui modifie l'indice de réfraction du cristal et donc le chemin optique et est lu par un faisceau lumineux de lecture modulé par la variation de la transmittivité.

Le dispositif modulateur spatial de lumière objet de la présente invention trouve application notamment à l'holographie conoscopique, d'une part, et d'autre part, dans les systèmes de reconnaissance de formes en temps réel en raison de la possibilité de transformation d'information non cohérente en information cohérente précédemment mentionnée.

La structure et le mode de fonctionnement du dispositif modulateur spatial de lumiere objet de l'invention seront décrits de façon plus détaillée dans la description ci-après et dans les dessins dans lesquels:
- la figure 1 représente aux points a) et b) la structure générale respectivement la caractéristique transmittivité-chemin optique d'un dispositif modulateur spatial de lumière objet de l'invention,
- la figure 2a représente en coupe selon un plan longitudinal de symétrie, un premier mode de réalisation d'un dispositif modulateur spatial de lumière objet de la présente invention,
- la figure 2b représente également en coupe selon un plan longitudinal de symétrie, un deuxième mode de réalisation d'un dispositif modulateur spatial de lumière selon la présente invention,
- la figure 3 représente une vue générale d'un dispositif d'holographie conoscopique à grande dynamique incorporant un dispositif modulateur spatial de lumière selon la présente invention.

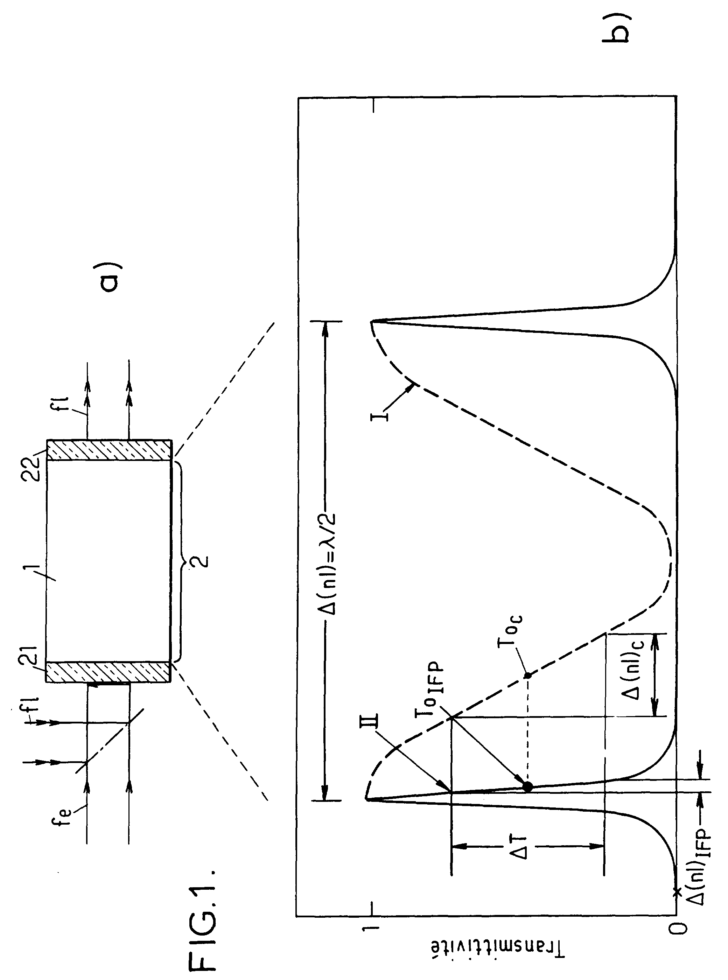

Une description plus détaillée d'un dispositif modulateur spatial de lumière conforme à l'objet de la présente invention sera donnée maintenant en liaison avec la figure 1 aux points a) et b) de celle-ci.

Sur la figure représentée, le dispositif modulateur spatial de lumière selon l'invention comprend un cristal, noté 1. Le cristal 1, dit photo-réfractif, peut être photo-réfringent et/ou photochromique.
Un premier faisceau lumineux, le faisceau lumineux d'écriture fe, émis à une longueur d'onde λe absorbée par le cristal est incident sur le cristal 1. Le faisceau lumineux est absorbé et crée par effet photo-réfractif ou par effet photochromique des variations d'indice de réfraction. Un deuxième faisceau lumineux de lecture fl, est émis à une longueur d'onde λl pour laquelle le cristal est intrinsèquement transparent et est modulé par un interféromètre de type Pérot-Fabry dont la transmitivité est fonction du changement d'indice de réfraction engendré par le faisceau d'écriture fe.

Le fait que les deux faisceaux sont à des longueurs d'ondes différentes permet ainsi de les combiner et de les séparer simplement à l'aide de filtres dichroïques ou autres éléments optiques similaires.

Conformément à un aspect particulièrement avantageux du dispositif modulateur spatial de lumière objet de la présente invention, ainsi que représenté schématiquement en figure 1, le cristal 1 est placé dans la cavité d'un système interférométrique 2. Sur la figure 1 au point a) le système interférométrique 2 est représenté par deux parois semi-transparentes symbolisant la cavité optique du système interférométrique précité.

De manière générale, le système interférométrique pourra être constitué par tout système classique présentant une caractéristique transmitivité-chemin optique de pente élevée de façon à induire une dynamique de variation maximale de la transmitivité pour une variation minimale d'indice de réfraction du cristal photo-réfractif et/ou du chemin optique précité.

On comprendra bien sûr que l'introduction du cristal 1 dans la cavité d'un système interférométrique 2 présentant les caractéristiques de transmitivité-chemin optique précitées permet d'augmenter la dynamique de variation d'amplitude de l'image ou des informations de l'objet à représenter transportées par le faisceau d'écriture fe et en définitive d'améliorer le contraste par rapport à la composante continue de ce même faisceau d'écriture fe. Une telle amélioration a en définitive pour effet d'augmenter la modulation d'indice provoquée dans le cristal par le faisceau lumineux d'écriture fe, une même variation de transmitivité du dispositif pouvant ainsi être obtenue pour une variation de moindre amplitude de l'indice de réfraction de ce dernier, ainsi qu'il sera décrit ci-après dans la description.

Dans un mode de réalisation préférentiel, le système interférométrique 2 peut être formé par un interféromètre de type Pérot-Fabry. Dans ce cas, le système interférométrique 2 est constitué par des miroirs semi-réfléchissants notés 21,22 sur la figure 1, ces miroirs délimitant la cavité optique de l'interféromètre.

Une description plus détaillée des conditions opératoires du dispositif modulateur spatial de lumière objet de la présente invention, tel que représenté en figure 1, sera maintenant donnée en liaison avec le point b) de cette même figure.

Sur la figure précitée on a représenté un diagramme dans lequel l'axe des abscisses est gradué en longueur de chemin optique, c'est-à-dire en valeur du produit de la dimension géométrique du cristal 1 dans le sens de propagation du faisceau d'écriture fe ou du faisceau de lecture fl dans le cristal et de l'indice de réfraction de ce cristal, l'axe d'ordonnées étant au contraire gradué en valeur relative de transmitivité.

Sur cette figure on a représenté en pointillé en I la courbe de transmitivité en fonction de la longueur de chemin optique, d'un modulateur spatial de lumière de type classique, c'est-à-dire d'un dispositif modulateur spatial de lumière constitué uniquement par un cristal photo-réfractif. Pour une longueur de chemin optique notée Δ(nl) du cristal demi-onde, soit Δ(nl) = λ/2 où λ désigne la longueur d'onde du faisceau d'inscription fe et du faisceau de lecture fl dans le cristal considéré, la courbe I précitée présente sensiblement la forme d'une sinusoïde et la valeur de transmitivité optimale pour obtenir dans ce cas la meilleure dynamique d'amplitude de signal, valeur de transmitivité notée T_{OC} est située à la valeur moitié de la transmitivité maximum. Cependant dans ce cas, compte tenu de la valeur relativement faible de la pente de la caractéristique transmitivité-longueur de chemin optique, cette pente valant au plus dans le cas de la courbe notée I -4 π/λ.n, soit une valeur absolue égale à 4π/λ.n, la variation correspondante nécessaire d'indice de réfraction et de longueur de chemin optique du cristal notée Δ(nl)_{C} est importante, ce qui se traduit par une valeur faible du contraste réel de la modulation spatiale de l'indice de réfraction du cristal 1 précité.

Sur cette même figure 1 au point b) précité, on a également représenté en trait continu, en II, la caractéristique transmitivité-chemin optique d'un modulateur spatial de lumière conforme à l'objet de la présente invention, dans lequel le cristal 1 a été placé dans la cavité optique 2 du système interférométrique précité. On notera que dans ce cas la pente de la caractéristique précitée est, en valeur absolue, multipliée environ par un facteur 10 compte tenu de la sélectivité du système interférométrique précité à la longueur d'onde correspondante. Dans ce cas, pour une même variation de transmitivité ΔT, la variation de longueur de chemin optique nécessaire notée Δ(nl) IFP est beaucoup plus faible que la variation correspondante de longueur de chemin optique d'un dispositif modulateur spatial de lumière de type classique, cette réduction correspondant bien sûr en une réduction dans le rapport des pentes des caractéristiques I et II précitées.

On comprend ainsi que conformément au dispositif modulateur spatial de lumière objet de la présente invention, une même variation de transmitivité peut être induite par une variation beaucoup plus faible de longueur de chemin optique d'où l'utilisation de faisceaux moins intenses et la possibilité d'une meilleure détection. De plus, la pente plus forte du dispositif permet, à condition de choisir le point de travail, d'augmenter la composante contenant l'information du signal et son contraste.

En ce qui concerne la réalisation du dispositif modulateur spatial de lumière objet de la présente invention, ainsi que représenté au point a) de la figure 1 on notera que le cristal 1 est placé entre les miroirs, un miroir 21 ou 22 délimitant la cavité optique constituant l'interféromètre.

On notera en outre que le cristal 1 photo-réfractif peut être constitué par un cristal photo-réfringent et/ou un cristal photo-chromique, certains cristaux pouvant notamment présenter des propriétés photo-réfringentes et photo-chromiques, en particulier les cristaux photo-réfractifs diélectriques.

Bien entendu, le cristal 1 peut être constitué par un cristal de Tantale Niobate de Potassium, de formule générale KTa(1-x)NbxO₃, ce type de cristal pouvant en fait être constitué par un cristal simplement ou doublement dopé. On rappellera que les cristaux de ce type, simplement ou doublement dopés, peuvent alors être dopés soit avec du fer, soit avec une composition de fer et de chrome.

Bien entendu, en fonction des caractéristiques d'indice et d'absorption du cristal, du faisceau d'écriture fe et du faisceau de lecture fl, et bien entendu en fonction des caractéristiques de l'interféromètre, lequel agit comme un filtre sélectif à la longueur d'onde précitée, il est possible de choisir en fonction de l'ensemble des paramètres précités, les longueurs d'onde effective des faisceaux d'écriture et de lecture fe et fl, de façon à obtenir une valeur d'indice et de longueur de chemin optique correspondant à une transmitivité optimale notée TO_{IFP} correspondant sensiblement à une valeur de transmitivité relative 1/2 sur la figure 1, afin d'obtenir la meilleure dynamique d'amplitude de variation de la transmitivité ΔT précitée.

Toutefois, selon un aspect particulièrement avantageux du dispositif objet de la présente invention, le point de fonctionnement optimal précité TO_{IFP} peut avantageusement être ajusté au moyen d'un champ électrique permettant de régler la valeur de l'indice de r-fraction du cristal 1 précité.

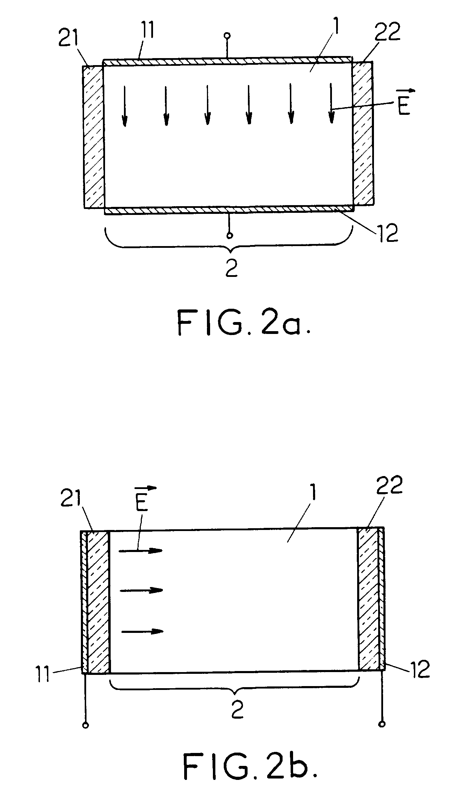

Dans ce but, le cristal 1, ainsi que représenté en figure 2a, est en outre muni d'une paire d'électrodes en vis-à-vis. Ces électrodes notées 11 et 12 sont destinées à appliquer au cristal le champ électrique E précité. Ce champ électrique peut être un champ électrique stationnaire ou éventuellement pseudo-stationnaire, le caractère pseudo-stationnaire du champ électrique étant défini par rapport aux longueurs d'ondes optiques des faisceaux d'écriture fe et de lecture fl, la fréquence du champ pseudo-stationnaire pouvant atteindre quelques MHz. La présence du champ électrique stationnaire ou pseudo-stationnaire permet alors d'ajuster la valeur moyenne de l'indice de réfraction et de longueur du chemin optique correspondant à la valeur optimale précitée, cette valeur optimale correspondant à celle de l'amplitude de variation maximale symétrique sur la caractéristique transmitivité-chemin optique.

Ainsi qu'on l'a représenté en figure 2a, les électrodes 11, 12 peuvent être constituées par un matériau électriquement conducteur, ces électrodes étant placées sur deux faces en vis-à-vis adjacentes à la face d'écriture respectivement de lecture du cristal. A titre d'exemple non limitatif, les électrodes 11, 12 peuvent être réalisées par une couche de métallisation sous vide appliquée sur les faces en vis-à-vis adjacentes à la face d'écriture et de lecture du cristal. La métallisation pourra consister en un dépôt d'aluminium, d'or ou d'indium de quelques micromètres d'épaisseur.

On notera en ce qui concerne la réalisation des miroirs diélectriques 21 et 22, que ceux-ci peuvent être réalisés, par exemple, par un dépôt d'une couche de fluorure de magnésium d'épaisseur égale au quart de la longueur d'onde des faisceaux lumineux d'écriture et de lecture fe ou fl.

En outre, et selon un mode de réalisation tel que représenté en figure 2b, les électrodes 11 et 12 peuvent être constituées par une couche de matériau électriquement conducteur transparent à la longueur d'onde λf de filtrage de l'interféromètre contenant le cristal 1. On notera que de préférence, en fait, les électrodes 11 et 12 sont placées sur les miroirs 21 et 22 délimitant la cavité optique précédemment mentionnée. Bien entendu, les miroirs 11 et 12 sont alors constitués, par exemple, par un dépôt d'indium sous vide sur une épaisseur de l'ordre du micromètre. Pour de telles épaisseurs l'indium présente la particularité d'être électriquement conducteur et transparent au rayonnement visible.

On notera sur les figures 2a et 2b la direction du champ électrique E, lequel dans le cas de la figure 2a est transversal à la direction de propagation des faisceaux lumineux d'écriture et de lecture fe, fl alors que, dans le cas de la figure 2b, le champ électrique E est parallèle à la direction de propagation de ces mêmes faisceaux lumineux dans le cristal. Dans les deux cas, le champ électrique E permet ainsi d'assurer une polarisation électrique correspondante du cristal et un ajustage de la valeur moyenne de l'indice de réfraction correspondant. On notera que la valeur du champ électrique précité doit être de l'ordre de quelques kV par centimètres, les cristaux précédemment mentionnés jouant le rôle du cristal 1 ayant au plus une longueur de 500 micromètres.

Une description plus détaillée du mode opératoire du dispositif modulateur de lumière tel que représenté en figure 2a ou 2b, sera donnée ci-après dans la description.

Les cristaux de Tantale Niobate de Potassium de formule précédemment indiquée suivent, de manière générale, une transition de phases ferroélectriques à une température critique notée Tc, laquelle dépend de la concentration x en niobium. On notera que cette concentration est de l'ordre de 8,5 k/1% par mole de niobium et pour x=35% la température critique Tc est égale à 300 degrés K.

Dans la région paraélectrique, c'est à dire pour T>Tc, le cristal présente une forme de réseau cristallin cubique et ainsi, contrairement à tous les cristaux photo-réfractifs habituels, l'effet électro-optique en fonction de l'amplitude E_{O} du champ électrique suit une loi quatradique et est donné par la relation :
Δn = (1/2) nₒ ³ g(εₒεEₒ)

Dans cette relation, Δn est la biréfringence de cristal, nₒ est l'indice de réfraction, g est le coefficient électro-optique du cristal, ε est la constante diélectrique relative εₒ représentant la constante diélectrique absolue dans le système d'unité MKSA et E_{O} est l'amplitude du champ électrique stationnaire ou pseudo stationnaire appliqué au cristal. On notera que pour une température T telle que T-Tc=10K, la valeur de la constante diélectrique relative ε est égale à 10⁴.

Deux mécanismes ont pu être mis en évidence pour rendre compte de l'effet photo-réfractif des cristaux de type précité.

Un premier mécanisme, dénommé effet photo-réfractif de charge d'espace, est le suivant : lorsque des motifs d'images contenus dans le faisceau lumineux d'écriture sont formés dans le cristal par ce dernier, des charges d'espace corrélées spatialement avec ces motifs sont induites pourvu que certains mécanismes de transport de ces charges soient présents. Ces mécanismes de transport peuvent par exemple être constitués, soit par un phénomène de diffusion de ces charges en raison par exemple d'un facteur de perte suffisant du matériau diélectrique constituant le cristal, soit en présence d'un champ électrique externe.

Dans le cas de la présence d'un champ électrique externe, ces champs de charge d'espace sont transformés en champs de gradient d'indice de réfraction, lesquels sont donnés par la relation :
δ(Δn)_{sc} = nₒ ³ g(εₒε) Eₒ E_{sc}

Dans la relation précédente on suppose toutefois que le champ de diffusion noté Esc est très inférieur au champ E_{O} lequel constitue le champ stationnaire ou pseudo stationnaire précédemment cité.

La profondeur de modulation, c'est-à-dire la variation correspondante d'indice de réfraction dans le milieu cristallin du cristal 1 précité et en définitive le contraste précédemment mentionné dans la description, est ainsi proportionnelle à l'amplitude du champ stationnaire ou pseudo stationnaire E_{O}. Ainsi, l'écriture du motif dans le milieu cristallin, c'est-à-dire la modulation spatiale d'indice, ayant été effectuée, il est alors possible de commuter cette modulation par la seule application du champ électrique externe d'amplitude E_{O}. En outre, en raison du fait que la constante diélectrique ε au voisinage de la transition de phase est grande, les variations de charge d'espace induites dans l'indice de réfraction sont très importants, typiquement Δₙ=0,001 pour E_{O}=1 kV/cm à la température T-Tc=10K.

Le deuxième mécanisme est l'effet photo-réfractif diélectrique. Selon ce deuxième mécanisme, le champ lumineux d'entrée, c'est-à-dire le faisceau lumineux d'écriture fe, engendre une modification métastable de l'état d'oxydation d'atomes d'impuretés par photoionisation des électrons d'atomes d'impuretés d'un type donné et leur capture par des atomes d'impuretés d'un autre type. Ces modifications métastables engendrent des modifications dans la température de transition de phases du cristal, la température Tc. Lorsqu'un cristal se trouve à une température légèrement supérieure à la température critique Tc, c'est-à-dire lorsque le cristal se trouve en phase cristalline cubique, ces modifications de la température critique Tc affectent fortement la constante diélectrique relative conformément à la loi de Curie-Weiss. L'application d'un champ électrique externe uniforme à un tel cristal permet alors de transformer la légère modulation de la valeur de constante diélectrique relative ε induite en une modulation de polarisation statique ou à basse fréquence. Cette dernière induit alors une modulation corrélée de l'indice de réfraction par l'intermédiaire de l'effet électro-optique quadratique.

L'effet photo-réfractif diélectrique dans un cristal en phase cristallographique cubique en fonction de la variation de température critique ΔTc de transition de phases induite par le faisceau lumineux de lecture ou d'écriture est fonction du champ électrique externe appliqué pendant le processus de lecture est alors donné par la relation :
δ(Δn)_{d} = nₒ ³ g ΔT_{c}(εεₒEₒ) / (T-T_{c})

Dans cette relation l'expression Δn=n_{O}-nₑ où n_{O} et nₑ représentent les indices ordinaire et extraordinaire de réfraction du cristal, g est le coefficient électro-optique du cristal et T est la température absolue du cristal.

On démontre que l'expression théorique du rendement de l'effet photo-réfractif diélectrique est donnée par la relation :
S(^{DPRE}) = nₒ ³ g(dT_{c}/dN) Pᵣ ²/[hνe(T-T_{c})]

Dans cette relation, dTc/dN représente la variation de température critique Tc par photon absorbé, hυ est l'énergie d'excitation en électron-volt, h représentant la valeur de la constante de Planck, e est la charge de l'électron et Pr est la polarisation statique électrique optimale induite par le champ électrique appliqué pendant le processus de lecture. En supposant que la limite supérieure du rendement S est obtenue lorsque que l'effet photo-réfractif diélectrique est équivalent à la création d'un défaut d'oxygène dans le titanate de strontium SrTiO, on obtient S=10⁻³ cc/J.

On notera que l'existence de l'effet photo-réfractif diélectrique a été vérifié expérimentalement à l'aide d'une méthode permettant d'effectuer une distinction entre l'effet photo-réfractif diélectrique et l'effet photo-réfractif par charge d'espace. Pour une description plus détaillée de la mise en oeuvre de la méthode précitée et pour une description plus large des résultats expérimentaux obtenus, on pourra se reporter par exemple à la publication de Messieurs A. Agranat et Y. Yacoby, "Photorefractive Effect Produced by Photoinduced Metastable Changes in the Dielectric Constant" publiée au numéro B 27 de la publication Physical Review n° 5712 (1983).

En ce qui concerne les résultats obtenus expérimentalement on dira simplement que pour un échantillon de type KTa_{O,924}, Nb0,076 O:Fe_{0,002} Cr_{0,01}, ce type de cristal correspondant à un cristal doublement dopé présentant une température critique Tc-85°K, on a constaté qu'à une température de cristal T=92°K et sous excitation à une longueur d'onde λ=4880°A le rendement photo-réfractif S était égal à S=6x10⁻⁵ cc/J. Ce résultat montre que le rendement photo-réfractif est dans ce cas approximativement trois fois plus important que dans le cas d'un cristal de niobate de lithium de forme LiNbO₃ : Fe dopé simplement au fer.

On notera que outre l'effet photo-réfractif les cristaux de Tantale Niobate de Potassium ou cristaux KTN, doublement dopés présentent des propriétés d'effet photo-chromique très élevées.

Bien que les cristaux de type KTN précédemment cités soient particulièrement adaptés afin de réaliser un dispositif modulateur spatial de lumière conforme à l'objet de la présente invention, on notera que l'utilisation de cristaux photo-réfractifs traditionnels tels que par exemple les cristaux de séléniure de bismuth de formule générale BSO peut être envisagée de manière avantageuse.

On notera cependant que l'utilisation des cristaux de type KTN précédemment mentionnée est susceptible de présenter les avantages ci-après par rapport aux cristaux plus classiques de type BSO :
- l'effet photo-réfractif par charge d'espace dans les cristaux KTN faiblement dopés est très sensible, en particulier, d'un ordre de grandeur plus sensibles que les cristaux de type BSO. En conséquence, l'utilisation de cristaux de type KTN faiblement dopés permet de réaliser des dispositifs de grande sensibilité.
- En ce qui concerne les cristaux de type KTN doublement dopés, c'est-à-dire les cristaux de type KTN : Ti, Fe, KTN : Cr, Fe et KTN : Cr, V présentent un effet photo-chromique développé. Bien que moins sensible que l'effet photo-réfractif par charges d'espace, l'effet photo-chromique présente deux avantages pour les modulateurs spatiaux de lumière :
   . il est d'une part très facile de maîtriser expérimentalement l'effet précité. En outre, en raison du fait que la sensibilité ne constitue pas un paramètre d'importance majeure dans les dispositifs d'holographie conoscopiques et en raison du fait que le cristal peut être réactivé par ajustage de l'intensité du faisceau de lecture fl, un dispositif modulateur spatial de lumière à effet photo-chromique peut être mis en oeuvre sans difficulté aucune.
- Compte tenu du fait que, au voisinage de la transition en phases ferroélectriques, la constante diélectrique des cristaux de type KTN est très élevée, jusqu'à des valeurs pouvant atteindre ou dépasser la valeur 10 à la température critique Tc, il est ainsi possible d'utiliser des champs électriques comparativement plus faibles de façon à commander et ajuster le point de fonctionnement. Ainsi, dans le modulateur spatial de lumière objet de la présente invention, il est possible d'utiliser des champs électriques stationnaires ou pseudo stationnaires d'amplitude E_{O} de l'ordre du kV par centimètre, alors que dans les cristaux de type BSO le champ électrique nécessaire est de l'ordre de 10 kV par centimètre.
- L'obstacle principal au développement de dispositifs à haute résolution utilisant l'effet photo-réfractif par charge d'espace conventionnel est le phénomène de migration des charges, lequel est caractéristique de ce type de dispositif. Il est alors possible d'utiliser l'effet photo-réfractif diélectrique dans lequel aucune migration de charges n'intervient. Ceci nécessite uniquement la commutation et la suppression du champ électrique durant le processus d'écriture, le champ électrique étant à nouveau établi lors du processus de lecture au moyen d'un faisceau de lecture fl de longueur d'onde appropriée.

On notera en particulier au sujet des longueurs d'ondes des faisceaux de lecture et d'écriture susceptibles d'être utilisées avec les dispositifs modulateurs spatiaux de lumière conformes à l'objet de la présente invention, que les faisceaux précités peuvent être constitués par des faisceaux en lumière blanche ou par des faisceaux en lumière monochromatique. Dans les deux cas, le rayonnement utilisé peut être de nature non cohérente. On notera en effet que, en raison de l'utilisation en lecture d'un système interférométrique tel qu'un système interférométrique de type Fabry Pérot, celui-ci agit toujours comme un filtre monochromatique. Il est donc possible d'adresser le système en lumière blanche par exemple mais la lumière prise en compte par le système n'est que la lumière monochromatique comprise dans la plage d'utilisation de l'interféromètre précité.

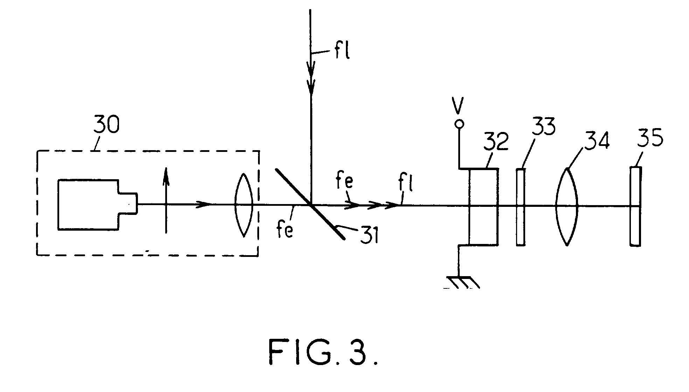

De manière non limitative, le dispositif modulateur spatial de lumière objet de la présente invention peut être utilisé dans les systèmes d'holographie conoscopique afin d'améliorer les performances de ces derniers par suppression de la composante continue de l'image holographique conoscopique correspondante pour réaliser ainsi un système holographique conoscopique à grande dynamique. Un tel système est représenté de manière schématique en figure 3.

Ainsi que représenté sur cette figure, ce système peut comprendre un dispositif de type conoscope 30, lequel délivre une image conoscopique sous forme d'un faisceau lumineux représentatif de cette image. A titre d'exemple non limitatif, ce dispositif de type conoscope 30 peut être constitué par le dispositif correspondant décrit dans la demande de brevet français 88 17225 incorporée à la présente description à titre de référence.

En outre, le système représenté en figure 3 comprend un miroir dichroïque 31 incliné à 45° par rapport à la direction du faisceau lumineux représentatif de l'image conoscopique précitée.

Le système d'holographie conoscopique à grande dynamique tel que représenté en figure 3 comporte en outre un dispositif modulateur spatial de lumière 32 tel que précédemment décrit dans la description. Ce dispositif modulateur spatial de lumière reçoit par l'intermédiaire du miroir dichroïque 31 précédemment cité, d'une part le faisceau lumineux représentatif de l'image conoscopique, ce faisceau lumineux constituant alors pour le dispositif modulateur spatial de lumière 32, le faisceau lumineux d'écriture. Ce dernier reçoit d'autre part un faisceau lumineux de lecture noté fl.

On notera enfin qu'en aval du dispositif modulateur spatial de lumière 32 peuvent être placés avantageusement un filtre optique 33 à la longueur d'onde λf de l'interféromètre de type Fabry Pérot constitutif du modulateur spatial de lumière 32 ainsi qu'un objectif de focalisation et un dispositif de détection de type caméra CCD par exemple, ces deux derniers éléments étant notés 34, 35 sur la figure 3.

On a ainsi décrit un modulateur spatial de lumière particulièrement performant puisque ce dernier conformément à l'invention présente un gain différentiel ou gain dynamique important correspondant à la pente de la caractéristique II sur la figure 1b, ce gain différentiel étant d'ailleurs indépendant du niveau continu du faisceau lumineux d'écriture ou de lecture sur une large plage de valeur de transmitivité. En outre, la possibilité d'ajuster le point de fonctionnement à une valeur optimale telle que la valeur T_{OIFP} sur la figure 1 point b), ce point de fonctionnement optimum correspondant à la pente maximum de la caractéristique II précitée et cette commande du point de fonctionnement pouvant être réalisée au moyen du champ électrique stationnaire externe appliqué, permet en outre dans le mode de réalisation de système holographique conoscopique tel que représenté en figure 3, de supprimer la composante continue du faisceau holographique porteur des informations de l'image holographique conoscopique, jouant le rôle de faisceau d'écriture dans le modulateur spatial de lumière incorporé.

## Revendications

1. Dispositif modulateur spatial de lumière comportant un cristal photo-réfractif ou photochromique, ce cristal (1) étant placé dans la cavité d'un système interférométrique (2) présentant une caractéristique (II) transmittivité-chemin optique ayant des parties de pente élevée de façon à induire une dynamique de variation maximale (ΔT) de ladite transmittivité pour une variation minimale Δ(nl)IFP d'indice de réfraction dudit cristal, ledit dispositif comportant des moyens pour diriger, en ladite cavité, un faisceau lumineux d'écriture qui modifie l'indice de réfraction du cristal et donc le chemin optique, et pour diriger, en ladite cavité, un faisceau lumineux de lecture de façon à le moduler par la variation de la transmittivité, le gain différentiel ou dynamique correspondant à ladite pente ΔT/Δ(nl)IFP de la caractéristique transmittivité-chemin optique caracterisé en ce que le cristal est un cristal demi-onde et, en outre, muni d'une paire d'électrodes (11), (12), destinées à appliquer audit cristal un champ électrique (Eo) stationnaire ou pseudo-stationnaire, et en ce que le dispositif comporte des moyens pour ajuster la valeur moyenne de l'indice de réfraction et donc du chemin optique à un point correspondant à une valeur optimale correspondant à celle de l'amplitude de variation maximale de la transmittivité sur ladite caractéristique transmittivité-chemin optique.

2. Dispositif selon la revendication 1, caractérisé en ce que ledit système interférométrique est formé par un interféromètre Pérot-Fabry, constitué par des miroirs (21), (22), délimitant la cavité optique de l'interféromètre.

3. Dispositif selon la revendication 2, caractérisé en ce que ledit cristal (1) est placé entre lesdits miroirs, (21,22) délimitant la cavité et étant respectivement placé sur la face d'entrée dudit faisceau lumineux d'écriture et la face de sortie dudit faisceau lumineux de lecture.

4. Dispositif selon la revendication 1, caractérisé en ce que le champ étant transversal, lesdites électrodes (11), (12) sont perpendiculaires aux miroirs (21,22), et sont constituées par une couche de matériau électriquement conducteur.

5. Dispositif selon la revendication 1, caractérisé en ce que le champ étant longitudinal, lesdites électrodes (11,12) sont parallèles aux miroirs et sont constituées par une couche de matériau électriquement conducteur transparent à la longueur d'onde à moduler les électrodes (11,12) transparentes étant placées sur une ou deux faces dudit cristal.

6. Dispositif selon l'une des revendications précédentes, caractérisé en ce que ledit cristal est un cristal photoréfractif diélectrique.

7. Dispositif selon l'une des revendications 1 à 6 précédentes, caractérisé en ce que, en vue de supprimer la migration des charges électriques provoquées par phénomène photo-réfractif diélectrique par charge d'espace, le champ électrique stationnaire ou pseudo-stationnaire Eₒ est supprimé pendant le processus d'écriture puis rétabli pendant le processus de lecture.

8. Dispositif selon l'une des revendications précédentes, caractérisé en ce que ledit cristal est un cristal de Tantalate Niobate de Potassium, de formule générale KTa₍₁₋ₓ₎NbxO₃ simplement ou doublement dopé.

9. Système d'holographie conoscopique à grande dynamique comprenant :
- un conoscope (30) délivrant une image conoscopique sous forme d'un faisceau lumineux représentatif de ladite image conoscopique,
- un dispositif modulateur spatial de lumière (32) selon l'une des revendications précédentes, ledit dispositif modulateur spatial de lumière recevant d'une part ledit faisceau lumineux représentatif de l'image conoscopique, ce faisceau lumineux constituant faisceau d'écriture (fe) pour ledit dispositif modulateur spatial de lumière et d'autre part un faisceau lumineux de lecture (fl), les deux faisceaux lumineux étant combinés sur le dispositif modulateur par un système optique permettant de combiner lesdits faisceaux lumineux.

10. Système selon la revendication 9, caractérisé en ce que celui-ci comporte en outre en aval du dispositif modulateur spatial de lumière (32) un système de filtrage optique (33) ou hybride consistant en une optique munie d'un masque et en un dispositif de détection de type caméra CCD (34,35) ou similaire.

## Patentansprüche

1. Vorrichtung zur räumlichen Lichtmodulation umfassend einen photorefraktiven oder photochromatischen Kristall, wobei dieser Kristall (1) im Resonator eines interferometrischen Systems (2) angeordnet ist, welches eine Durchlässigkeits-zu-optischer-Weg-Kennlinie (II) mit Bereichen großer Steigung aufweist, derart, daß eine maximale Änderungsdynamik (AT) der Durchlässigkeit bei einer minimalen Änderung Δ(nl)IFP des Brechungsindex des Kristalls erreicht wird, wobei die Vorrichtung Mittel aufweist, um in den Resonator einen Schreib-Lichtstrahl zu führen, welcher den Brechungsindex des Kristalls und somit den optischen Weg ändert, und um in den Resonator einen Lese-Lichtstrahl derart zu führen, daß er durch die Änderung der Durchlässigkeit moduliert wird, wobei die differentielle oder dynamische Verstärkung der Steigung ΔT/Δ(nl)IFP der Durchlässigkeits-zu-optischer-Weg-Kennlinie entspricht, dadurch gekennzeichnet, daß der Kristall ein Halbwellen-Kristall ist und ferner mit einem Paar Elektroden (11), (12) versehen ist, welche dazu bestimmt sind, an den Kristall ein stationäres oder pseudostationäres elektrisches Feld (Eo) anzulegen, und dadurch, daß die Vorrichtung Mittel umfaßt, um den mittleren Wert des Brechnugsindex und damit des optischen Wegs auf einen Punkt einzustellen, welcher einem optimalen Wert entspricht, der dem der maximalen Amplitudenänderung der Durchlässigkeit auf der Durchlässigkeits-zuoptischer-Weg-Kennlinie entspricht.

2. Vorrichtung nach Anspruch 1, dadurch gekennzeichnet, daß das interferometrische System aus einem Fabry-Perot-Interferometer gebildet ist, welches aus den den optischen Resonator des Interferometers begrenzenden Spiegeln (21), (22) gebildet ist.

3. Vorrichtung nach Anspruch 2, dadurch gekennzeichnet, daß der Kristall (1) zwischen den Spiegeln (21, 22) angeordnet ist, welche den Resonator begrenzen und auf der Eintrittsseite des Schreib-Lichtstrahls bzw. auf der Austrittseite des Lese-Lichtstrahls angeordnet sind.

4. Vorrichtung nach Anspruch 1, dadurch gekennzeichnet, daß das Feld transversal verläuft, die Elektroden (11), (12) zu den Spiegeln (21,22) orthogonal verlaufen und aus einer Lage eines elektrisch leitenden Materials gebildet sind.

5. Vorrichtung nach Anspruch 1, dadurch gekennzeichnet, daß das Feld longitudinal verläuft, die Elektroden (11, 12) zu den Spiegeln parallel verlaufen und aus einer Lage eines elektrisch leitenden, bei der Wellenlänge des zu modulierenden Lichts transparenten Materials gebildet sind, wobei die transparenten Elektroden (11,12) auf einer oder zwei Seiten des Kristalls angeordnet sind.

6. Vorrichtung nach einem der vorangehenden Ansprüche, dadurch gekennzeichnet, daß der Kristall ein dielektrischer photorefraktiver Kristall ist.

7. Vorrichtung nach einem der vorangehenden Ansprüche 1 bis 6, dadurch gekennzeichnet, daß im Hinblick darauf, die durch dielektrischen photorefraktiven Effekt aufgrund von Raumladungen hervorgerufene Migration von elektrischen Ladungen zu unterdrücken, das stationäre oder pseudostationäre elektrisches Feld Eo während des Schreibvorgangs unterdrückt wird und anschließend während des Lesevorgangs wiederhergestellt wird.

8. System nach einem der vorangehenden Ansprüche, dadurch gekennzeichnet, daß der Kristall ein einfach oder doppelt dotierter Kalium-Tantalat-Niobat-Kristall der allgemeinen Formel KTa₍₁₋ₓ₎NbxO₃ ist.

9. Vorrichtung zur konoskopischen Holographie mit großer Dynamik, umfassend:
- ein Konoskop (30), welches ein konoskopisches Bild in Form eines für das konoskopische Bild repräsentativen Lichtstrahls liefert,
- eine Vorrichtung zur räumlichen Lichtmodulation (32) nach einem der vorangehenden Ansprüche, wobei die Vorrichtung zur räumlichen Lichtmodulation zum einen den für das konoskopische Bild repräsentativen Lichtstrahl empfängt, wobei dieser Lichtstrahl den Schreib-Lichtstrahl (fe) für die Vorrichtung zur räumlichen Lichtmodulation bildet, und zum anderen einen Lese-Lichtstrahl (fl) empfängt, wobei die beiden Lichtstrahlen durch ein optisches System, welches das Vereinigen der Lichtstrahlen ermöglicht, auf der Modulationsvorrichtung vereinigt werden.

10. System nach Anspruch 9, dadurch gekennzeichnet, daß es ferner hinter der Vorrichtung zur räumlichen Lichtmodulation (32) ein System zur optischen Filterung (33) oder ein Hybrid umfaßt, welches aus einer mit einer Maske versehenen Optik und aus einer Detektorvorrichtung vom CCD-Kameratyp (34,35) oder ähnlichem besteht.

## Claims

1. A spatial light modulator device including a photorefractive or photochromic crystal, said crystal (1) being placed in the cavity of an interferometer system (2) having a transmittivity-optical path length characteristic (II) of steep slope parts so as to induce a dynamic range of maximum variation in said transmittivity (ΔT) for minimum variation in the refractive index Δ(nl)IFP of said crystal, said device comprising means for directing within said cavity a write light beam which modifies the refractive index of the crystal and thus modifies the optical path length, and for directing within said cavity a read light beam so as to modulate the latter by variation in transmittivity, the differential gain or dynamic range corresponding to said slope ΔT/Δ(nl)IFP of its transmittivity-optical path length characteristic, characterized by said crystal being a half wave crystal provided with a pair of electrodes (11, 12) adapted for applying a stationary or pseudo stationary electric field (Eₒ) to said crystal, said device comprising means for adjusting the mean value of the refractive index and thus of the optical path length to a point value corresponding to an optimum value providing maximum variation in the transmittivity-optical path length characteristic.

2. A device according to claim 1, characterized in that said interferometer system is constituted by a Fabry-Perot interferometer, constituted by mirrors (21, 22) delimiting the optical cavity of the interferometer.

3. A device according to claim 2, characterized in that said crystal (1) is placed between said mirrors (21, 22), delimiting the cavity and being placed on the inlet face of said write beam and the outlet face of said read beam respectively.

4. A device according to claim 1, characterized in that said field is transverse, said electrodes (11, 12) being perpendicular to the mirrors (21, 22) and being constituted by respective layers of electrically conductive material.

5. A device according to claim 1, characterized in that said field is longitudinal, said electrodes (11, 12) being parallel to the mirrors (21, 22) and being constituted by respective layers of electrically conductive material that is transparent at the wavelength to be modulated, the transparent electrodes (11, 12) being placed on one or two faces of said crystal.

6. A device according to any preceding claim, characterized in that said crystal is a dielectric photo-refractive crystal.

7. A device according to any one of preceding claims 1 to 6, characterized in that in order to eliminate electric charge migration caused by the space charge dielectric photo-refractive phenomenon, the stationary or pseudo-stationary electric field Eₒ is eliminated during the write process and is then re-established during the read process.

8. A device according to any preceding claim, characterized in that said crystal is a singly- or doubly-doped potassium tantalum niobate crystal having the general formula KTa₍₁₋ₓ₎NbₓO₃.

9. A conoscopic holography system of large dynamic range comprising :
- a conoscope (30) delivering a conoscopic image in the form of a light beam representative of said conoscopic image ; and
- a spatial light modulator device (32) according to any preceding claim, said spatial light modulator device receiving both a read light beam (fl) and said light beam representative of the conoscopic image, which light beam constitutes a write beam (fe) for said spatial light modulator device, the two light beams being combined on the modulator device by means of an optical system for combining said light beams.

10. A system according to claim 9, characterized in that downstream from the spatial light modulator device (32) the system includes an optical or a hybrid filter system (33) consisting in an optical system with a mask, and a detector device of the CCD camera type (34, 35) or the like.
